# EUROPEAN PATENT APPLICATION

(11) **EP 4 650 462 A1**
(43) Date of publication of application: **19.11.2025**
(21) Application number: 23753782.4
(22) Date of filing: 10.05.2023
(51) Int. Cl.: C21B 5/00, C21B 13/12, C22B 7/02

(54) **METHOD FOR RECOVERING IRON AND VALUABLE METALS FROM ELECTRIC ARC FURNACE DUST**

(30) Priority: 09.01.2023 KR 20230002979
(71) Applicant: Korea Zinc Co., Ltd., Seoul 06110 (KR)
(72) Inventor: CHOI, Heon Sik, 3101, Ulsan (KR); KANG, Sung Moon, 103-1010, Ulsan (KR)
(74) Representative: Angerhausen, Christoph
(86) International application number: PCT/KR2023/006347
(87) International publication number: WO 2024/150882

(57) **Abstract**

A method for recovering iron and valuable metals from electric arc furnace dust includes: an electric arc furnace dust treatment process of treating electric arc furnace dust to produce an intermediate product containing iron; an intermediate product treatment process of heating the intermediate product to a predetermined temperature range so that the intermediate product charged into a melting furnace is melted and reduced; and a recovery process of recovering metallic iron produced by reduction from the intermediate product and recovering valuable metals generated in the form of dust. The intermediate product treatment process includes a reducing agent charging process of charging a reducing agent containing carbon into the melting furnace to increase an amount of the metallic iron reduced from the intermediate product. The reducing agent is charged into the melting furnace at an equivalent ratio of 1.7:1 to 3.1:1 relative to iron oxide contained in the intermediate product.

## Description

### TECHNICAL FIELD

The present disclosure relates to a method for recovering iron and valuable metals from electric arc furnace dust.

### BACKGROUND

Recently, as the amount of dust, as part of waste, increases, air pollution caused by dust is rapidly increasing. In particular, the amount of electric arc furnace dust (EAFD), which has a high degree of heavy metal contamination, is continuously increasing over 360,000 tons per year. Thus, a method of landfilling electric arc furnace dust has been used in order to treat electric arc furnace dust.

However, the method of simply landfilling electric arc furnace dust may cause environmental pollution by contaminating soil and groundwater. In addition, electric arc furnace dust contains a large amount of valuable metals. If the electric arc furnace dust is landfilled, valuable metals contained in the electric arc furnace dust cannot be recycled and must be disposed of. Therefore, a method of treating electric arc furnace dust capable of recycling valuable metals while preventing ecological and environmental contamination has been developed.

For example, electric arc furnace dust can be used as a raw material in a process of producing a crude zinc oxide. In the process of producing such a crude zinc oxide, electric arc furnace dust is treated by using a Rotary Hearth Furnace (RHF) or a Rotary Kiln (RK). In this case, an intermediate product is produced together with the crude zinc oxide. The intermediate product contains metallic iron and iron oxide, and may further contain impurities such as zinc, lead, and silver.

However, an iron content of the intermediate product generated in the process of producing a crude zinc oxide is about 70%. Only 40% to 70% of the iron contained in the intermediate product exists in the form of metallic iron. In other words, 30% to 60% of the iron contained in the intermediate product exists in the form of iron oxide. As such, the iron content of the intermediate product is low but the content of impurities thereof is high, making it difficult to use the intermediate product as a raw material in an ironmaking or steelmaking process. Most of intermediate products are landfilled as industrial wastes.

### SUMMARY

In view of the above background, it is an object of the present disclosure to improve the recovery rate of iron from an intermediate product generated in a process of treating electric arc furnace dust and to increase an iron content.

In addition, it is an object of the present disclosure to recycle valuable metals by improving the recovery rate of valuable metals such as zinc, lead and silver generated in a process of treating electric arc furnace dust.

In addition, it is an object of the present disclosure to improve the recovery rate of iron and valuable metals, reduce the amount of iron and valuable metals to be landfilled, and reduce landfill costs.

In addition, it is an object of the present disclosure to reduce the amount of slag generated by improving the recovery amount of iron and valuable metals, and reduce costs by minimizing the amount of slag to be treated.

According to one embodiment, there may be provided a method for recovering iron and valuable metals from electric arc furnace dust, including: an electric arc furnace dust treatment process of treating electric arc furnace dust to produce an intermediate product containing iron; an intermediate product treatment process of heating the intermediate product to a predetermined temperature range so that the intermediate product charged into a melting furnace is melted and reduced; and a recovery process of recovering metallic iron produced by reduction from the intermediate product and accommodated in the melting furnace in a molten state and recovering valuable metals generated in the form of dust in the intermediate product treatment process, wherein the intermediate product treatment process includes a reducing agent charging process of charging a reducing agent containing carbon into the melting furnace to increase an amount of the metallic iron reduced from the intermediate product, and the reducing agent is charged into the melting furnace at an equivalent ratio of 1.7:1 to 3.1:1 relative to iron oxide contained in the intermediate product.

According to one embodiment, the reducing agent may have a diameter of 5 mm to 20 mm.

According to one embodiment, the intermediate product treatment process may include a flux charging process of charging a flux into the melting furnace to adjust a basicity (CaO/SiO₂) of slag generated in the intermediate product treatment process, and the flux may be charged into the melting furnace so that the basicity of the slag is 0.4 to 1.5.

According to one embodiment, the flux may include at least one of limestone, silica and dolomite.

According to one embodiment, the recovery process may include a metallic iron recovery process of discharging the metallic iron accommodated in the melting furnace in a molten state from the melting furnace and recovering the discharged metallic iron in the form of an ingot through a casting.

According to one embodiment, the recovery process may include a valuable metal recovery process of recovering the valuable metals through a bag filter process.

According to one embodiment, an iron content in the metallic iron recovered in the recovery process is range of 90% to 97%.

According to one embodiment, the melting furnace may be one of a SAF (Submerged Arc Furnace), an ACEAF (Alternating Current Electronic Arc Furnace) and a DCEAF (Direct Current Electronic Arc Furnace).

According to one embodiment, the predetermined temperature in the intermediate product treatment process is range of 1,450°C to 1,650 °C .

According to one embodiment, in the electric arc furnace dust treatment process, the electric arc furnace dust may be treated to produce a crude zinc oxide and the intermediate product.

According to various embodiments of the present disclosure, it is possible to improve the recovery rate of iron from an intermediate product generated in a process of treating electric arc furnace dust and to increase an iron content.

In addition, it is possible to recycle valuable metals by improving the recovery rate of valuable metals such as zinc, lead and silver generated in a process of treating electric arc furnace dust.

In addition, it is possible to improve the recovery rate of iron and valuable metals, reduce the amount of iron and valuable metals to be landfilled, and reduce landfill costs.

In addition, it is possible to reduce the amount of slag generated by improving the recovery amount of iron and valuable metals, and reduce costs by minimizing the amount of slag to be treated.

### BRIEF DESCRIPTION OF THE DRAWINGS

FIG. 1 is a flowchart showing a method for recovering iron and valuable metals from electric arc furnace dust according to one embodiment of the present disclosure.
FIG. 2 is a flowchart showing the intermediate product treatment process shown in FIG. 1.
FIG. 3 is a flowchart showing the recovery process shown in FIG. 1.

### DETAILED DESCRIPTION

Embodiments of the present disclosure are illustrated for describing the technical scope of the present disclosure. The scope of the claims according to the present disclosure is not limited to the embodiments described below or to the detailed descriptions of these embodiments.

Hereinafter, the present disclosure will be described with reference to the drawings.

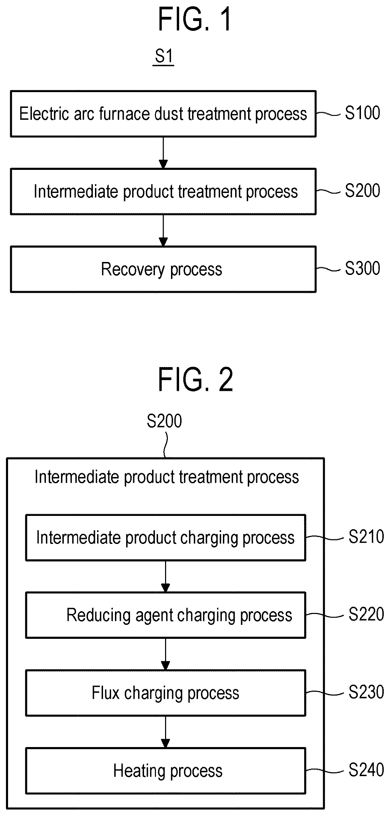

FIG. 1 is a flowchart showing a method for recovering iron and valuable metals from electric arc furnace dust according to one embodiment of the present disclosure.

Referring to FIG. 1, in a method S1 for recovering iron and valuable metals from electric arc furnace dust, iron and valuable metals may be recovered from electric arc furnace dust. The method S1 for recovering iron and valuable metals from electric arc furnace dust may include an electric arc furnace dust treatment process S100, an intermediate product treatment process S200, and a recovery process S300.

In the electric arc furnace dust treatment process S100, a crude zinc oxide and an intermediate product may be produced by treating electric arc furnace dust. In this specification, electric arc furnace dust (EAFD) refers to fine particle powder collected during a cooling process of scattering dust or gas generated in a melting process in an electric furnace using metal scrap as a main raw material. For example, the electric arc furnace dust may contain iron oxide, valuable metals such as lead, zinc and silver, and hazardous heavy metals such as cadmium, mercury and chromium. On the other hand, in the electric arc furnace dust treatment process S100, the electric arc furnace dust may be heated by a Rotary Hearth Furnace (RHF) or a Rotary Kiln (RK). In this case, the electric arc furnace dust undergoes a reduction reaction and zinc is produced by reducing a zinc oxide contained in the electric arc furnace dust. For example, zinc may be produced in a gaseous state, and may be recovered as a crude zinc oxide through reoxidation and cooling processes. In addition, an intermediate product may be produced by reducing the electric arc furnace dust.

The intermediate product contains iron, and may contain iron oxide and metallic iron. For example, the intermediate product may contain metallic iron produced by reducing an iron oxide contained in electric arc furnace dust and iron oxide remaining completely unreduced. In addition, the intermediate product may contain valuable metals such as zinc, lead and silver.

Meanwhile, the reactions in which the electric arc furnace dust is reduced to metallic iron in the electric arc dust treatment process S100 are as follows.

C(s) + O₂(g) = CO₂(g) ... (Reaction Formula 1)

C(s) + CO₂(g) = 2CO(g) ... (Reaction Formula 2)

3Fe₂O₃(s) + CO(g) = 2Fe₃O₄(s) + CO₂(g) ... (Reaction Formula 3)

Fe₃O₄(s) + CO(g) = 3FeO(s) + CO₂(g) ... (Reaction Formula 4)

FeO(s) + CO(g) = Fe(s) + CO₂(g) ... (Reaction Formula 5)

Although there has been described that the intermediate product is produced together with the crude zinc oxide in the electric arc furnace dust treatment process S100, this is only an example. The present disclosure is not limited thereto. Therefore, the intermediate product may be produced in a separate process that does not produce a crude zinc oxide.

The electric arc furnace dust treatment process S100 includes the electric arc furnace dust roasting process.

Referring to FIG. 2, in the intermediate product treatment process S200, a melting furnace may be heated to a predetermined temperature range. In this case, the intermediate product charged into the melting furnace is melted, and the iron oxide contained in the intermediate product charged into the melting furnace is reduced to metallic iron. In this case, reduction and melting of the intermediate product may be performed simultaneously. Further, in the intermediate product treatment process S200, valuable metals may be generated in the form of dust. The intermediate product treatment process S200 may include an intermediate product charging process S210, a reducing agent charging process S220, a flux charging process S230, and a heating process S240.

In the intermediate product charging process S210, the intermediate product produced in the electric arc furnace dust treatment process S100 is charged into the melting furnace. For example, the intermediate product produced in the electric arc furnace dust treatment process S100 may be directly charged into the melting furnace in a high temperature state. In the intermediate product charging process S210, the intermediate product charged into the melting furnace may have a diameter of 10 mm to 20 mm. If the diameter of the intermediate product is less than 10 mm, a loss of the intermediate product due to dust collection occurs in a process of transporting and charging the intermediate product. That is, the intermediate product is mixed with the dust, and the quality of the valuable metals obtained from the dust is lowered. In addition, if the diameter of the intermediate product is greater than 20 mm, the clogging of a raw material by the intermediate product occurs in the process of transporting and charging the intermediate product. This poses a problem that the intermediate product is not smoothly charged into the melting furnace. Further, the melting furnace may be a SAF (Submerged Arc Furnace). However, this is only an example. The melting furnace may also be, for example, an ACEAF (Alternating Current Electronic Arc Furnace) or a DCEAF (Direct Current Electronic Arc Furnace). Although the melting furnace has been described herein as being an electric furnace, this is only an example. A heating means such as an induction furnace or the like may be used as the melting furnace.

In the reducing agent charging process S220, a reducing agent is charged into the melting furnace to increase the amount of metallic iron reduced from the intermediate product. The reducing agent may contain carbon and may further contain one or more of coal and coke. In addition, the reducing agent is charged into the melting furnace at an equivalent ratio of 1.7:1 to 3.1:1 relative to the iron oxide contained in the intermediate product. As used herein, the term "equivalent" refers to the mass of a material divided by the molar mass. The equivalent ratio between the reducing agent and the iron oxide means the ratio of the equivalent of the reducing agent obtained by dividing the mass of the reducing agent by the molar mass of the reducing agent and the equivalent of iron obtained by dividing the mass of the iron oxide by the molar mass of iron. For example, when the reducing agent is charged into the melting furnace at an equivalent ratio of less than 1.7:1 relative to the iron oxide contained in the intermediate product, the amount of iron oxide to be reduced to metallic iron is reduced, thereby reducing the recovery rate of metallic iron. In addition, when the reducing agent is charged into the melting furnace at an equivalent ratio of more than 3.1:1 relative to the iron oxide contained in the intermediate product, impurities other than the intermediate product are reduced, the content of metallic iron decreases, the fluidity of slag deteriorates, and the treatment cost increases. This reducing agent may be charged into the melting furnace while being mixed with the iron oxide. In addition, the reducing agent charged into the melting furnace in the reducing agent charging process S220 may have a diameter of 5 mm to 20 mm. If the diameter of the reducing agent is less than 5 mm, a loss of the reducing agent due to dust collection occurs. If the diameter of the reducing agent is greater than 20 mm, the reaction area is small and the reaction is not performed smoothly.

In the flux charging process S230, a flux is charged into the melting furnace to increase the amount of metallic iron reduced from the intermediate product and to improve the fluidity of the slag. In this regard, the flux is used to control the basicity (CaO/SiO₂) of the slag produced when the intermediate product is melted and reduced, and may be charged into the melting furnace so that the basicity of the slag is 0.4 to 1.5. For example, if the basicity of the slag is less than 0.4, the slag viscosity becomes too high, and difficulties arise in subsequently tapping the molten metallic iron. If the basicity of the slag is greater than 1.5, the reduction efficiency of metallic iron is lowered and the amount of slag generated is increased.

In addition, the flux may contain one or more of limestone, silica, and dolomite. For example, when an intermediate product having a low proportion of calcium oxide (CaO) is charged into the melting furnace in the intermediate product charging process S210, limestone may be charged into the melting furnace in the flux charging process S230. As another example, when an intermediate product having a high proportion of calcium oxide is charged into the melting furnace in the intermediate product charging process S210, silica may be charged into the melting furnace in the flux charging process S230. The flux charged into the melting furnace in the flux charging process S230 may have a diameter of 5 mm to 20 mm. If the diameter of the flux is less than 5 mm, a loss of the flux due to dust collection occurs during the process of transporting and charging the flux. That is, the flux is mixed with the dust, thereby lowering the quality of the valuable metals obtained from the dust. If the diameter of the flux is greater than 20 mm, there is a problem in that the flux is not smoothly charged into the melting furnace due to the clogging of the raw material by the intermediate product in the process of transporting and charging the flux.

Meanwhile, the intermediate product charging process S210, the reducing agent charging process S220, and the flux charging process S230 may be performed simultaneously or sequentially. For example, when the intermediate product charging process S210, the reducing agent charging process S220, and the flux charging process S230 are performed simultaneously, the intermediate product, the reducing agent, and the flux are charged into the melting furnace while being mixed with each other. In addition, the intermediate product, the reducing agent, and the flux may be continuously charged into the melting furnace for a predetermined time. For example, the intermediate product, the reducing agent, and the flux may be continuously charged into a 500 KVA SAF melting furnace for 3 to 4 hours based on 1 ton. If 1 ton of the intermediate product, the reducing agent, and the flux are charged for less than 3 hours, the intermediate product, the reducing agent, and the flux are piled up on the slag without being melted. More heat energy needs to be supplied to melt the intermediate product, the reducing agent, and the flux, resulting in heat loss. In addition, when 1 ton of the intermediate product, the reducing agent, and the flux are charged for more than 4 hours, the recovery efficiency of iron and valuable metals is lowered. In this specification, it has been described that 1 ton of the intermediate product, the reducing agent, and the flux are charged into the 500KVA SAF melting furnace. However, this is only an example, and the present disclosure is not limited thereto.

When the intermediate product charging process S210, the reducing agent charging process S220, and the flux charging process S230 are performed, the intermediate product, the reducing agent, and the flux may be charged into the melting furnace in a state in which molten metal and slag are formed inside the melting furnace. That is, after predetermined metallic iron is initially melted to form slag and molten metal, the intermediate product charging process S210, the reducing agent charging process S220, and the flux charging process S230 are additionally performed. In this case, even if the charged intermediate product is reduced to generate a gas, the generated gas is easily discharged to the outside because the raw material layer does not cover the slag and metal layer. In other words, there is an effect of preventing the generated gas from generating a foaming phenomenon in the molten metal and slag. Further, since the raw material layer does not cover the slag and metal layer, zinc is prevented from remaining as a zinc oxide in the raw material layer. In this case, since the dust is easily discharged to the outside, there is an effect of easily recovering valuable metals such as zinc and lead.

In the heating process S240, the intermediate product is heated to a predetermined temperature range so that the intermediate product charged into the melting furnace is melted and reduced. For example, in the heating process S240, the inside of the melting furnace may be heated by supplying electric power to an electric furnace. In other words, the electric furnace may be supplied with electric power to heat the intermediate product charged therein. For example, electric power of 1,400 kWh or more and 1,700 kWh or less per ton of the intermediate product may be supplied. In this case, the temperature inside the electric furnace may be adjusted to range of 1,450°C to 1,650°C, and the intermediate product may be melted and reduced in this temperature range. If the temperature inside the electric furnace is less than 1,450°C, the melting and reduction of the intermediate product does not occur smoothly. If the temperature inside the electric furnace is greater than 1,650°C, manganese or silicon may be reduced and introduced as impurities, which may deteriorate the quality of metallic iron produced.

Meanwhile, the reactions in which the iron oxide is reduced to the metallic iron by the reducing agent in the heating process S240 are as follows.

FeO(s) + C(s) = Fe + CO(g) ... (Reaction Formula 6)

FeO(s) + CO(g) = Fe(s) + CO₂(g) ... (Reaction Formula 7)

CO₂(g) + C(s) = 2CO(g) ... (Reaction Formula 8)

The intermediate product treatment process S200 includes the intermediate product smelting process.

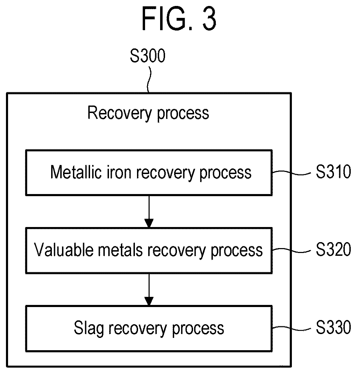

Referring to FIG. 3, in the recovery process S300, metallic iron and valuable metals accommodated in the melting furnace are recovered. The content of metallic iron recovered in the recovery process S300 may be range of 90% to 97% or less. This recovery process S300 may include a metallic iron recovery process S310, a valuable metals recovery process S320, and a slag recovery process S330.

In the metallic iron recovery process S310, the metallic iron, which is reduced from the intermediate product in the intermediate product treatment process S200 and accommodated in the melting furnace in a molten state, is recovered. For example, the metallic iron accommodated in the melting furnace in a molten state is located at the bottom of the melting furnace due to the phase separation caused by the difference in specific gravity from the slag. In this case, the metallic iron in a molten state may be discharged through a discharge passage at the bottom of the melting furnace. In addition, the metallic iron discharged from the melting furnace may be recovered in the form of a rectangular parallelepiped ingot having a size of 50 cm × 20 cm × 5 cm through a casting process. The carbon content in the metallic iron discharged from the melting furnace may be 0.5% to 2.5%, and the metallic iron may be pig iron. In addition, the iron content in the metallic iron recovered in the metallic iron recovery process S310 may be range of 90% to 97%.

In the valuable metals recovery process S320, the valuable metals generated in the form of dust in the intermediate product treatment process S200 are recovered. For example, in the valuable metals recovery process S320, the valuable metals may be recovered through a bag filter process. In addition, the valuable metals may include one or more of zinc (Zn), lead (Pb), and silver (Ag).

In the slag recovery process S330, the slag accommodated in the melting furnace is recovered. For example, the slag in the melting furnace is located above the metallic iron due to the phase separation caused by the difference in specific gravity from the metallic iron. When the metallic iron is discharged through the metallic iron recovery process S310, the slag can be discharged from the melting furnace through the discharge passage. A part of the slag recovered in the slag recovery process S330 may be recycled as a raw material for cement, or the like.

Hereinafter, the contents and recovery rates of metallic iron and valuable metals recovered according to one embodiment of the present disclosure will be described. In this embodiment, four different intermediate products were charged into the melting furnace as follows. The contents (wt%) of the respective components of the charged intermediate products are indicated in Table 1 below.

**[Table 1]**

| | Total iron | Metallic iron | Zinc | Lead | Silver | Sulfur | Chromium | CaO | SiO₂ |
|---|---|---|---|---|---|---|---|---|---|
| Product A | 38.1 | 16.0 | 4.52 | 0.1088 | 0.0082 | 0.97 | 0.52 | 5.01 | 8.61 |
| Product B | 70.7 | 49.5 | 0.41 | 0.0013 | 0.0014 | 0.27 | 0.02 | 10.99 | 7.22 |
| Product C | 68.2 | 35.7 | 0.95 | 0.0022 | 0.0016 | 0.40 | 0.03 | 8.96 | 5.39 |
| Product D | 60.8 | 38.5 | 1.65 | 0.1231 | 0.0046 | 0.71 | 0.11 | 11.22 | 7.52 |

### Example 1

In Example 1, after charging 1 ton of the intermediate product A into the melting furnace, coal was added as a reducing agent. The coal was blended at an equivalent ratio of 2.5:1 relative to the iron oxide contained in the intermediate product A. In this case, the basicity of the slag is 0.6. The contents (wt%) and recovery rates (%) of the metallic iron, the slag and the dust produced according to Example 1 are shown in Table 2 below.

**[Table 2]**

| | Iron | | Zinc | | Lead | |
|---|---|---|---|---|---|---|
| | Content | Recovery rate | Content | Recovery rate | Content | Recovery rate |
| Metallic iron | 91.07 | 98.00 | 0.02 | - | 0.0001 | - |
| Slag | 0.87 | - | 0.04 | - | 0.0012 | - |
| Dust | 4.01 | - | 45.90 | 98.65 | 1.11 | 99.49 |

| | Silver | | Sulfur | | Chromium | |
|---|---|---|---|---|---|---|
| | Content | Recovery rate | Content | Recovery rate | Content | Recovery rate |
| Metallic iron | 0.0044 | - | 1.53 | - | 0.75 | - |
| Slag | 0.0034 | - | 0.64 | - | 0.46 | - |
| Dust | 0.05 | 60.42 | 0.63 | - | 0.16 | - |

In Example 1, the recovery rate of iron recovered as the metallic iron was 98.00%, and the recovery rates of zinc and lead recovered as the dust were 98.65% and 99.49%, respectively.

### Example 2

In Example 2, after charging 1 ton of the intermediate product A into the melting furnace, coal was added as a reducing agent. The coal was blended at an equivalent ratio of 2.5:1 relative to the iron oxide contained in the intermediate product A. In addition, 20 kg of limestone was charged into the melting furnace so that the basicity of the slag is 0.8. The contents (wt%) and recovery rates (%) of the metallic iron, the slag and the dust produced according to Example 2 are shown in Table 3 below.

**[Table 3]**

| | Iron | | Zinc | | Lead | |
|---|---|---|---|---|---|---|
| | Content | Recovery rate | Content | Recovery rate | Content | Recovery rate |
| Metallic iron | 90.60 | 98.18 | 0.03 | - | 0.0001 | - |
| Slag | 0.40 | - | 0.04 | - | 0.0024 | - |
| Dust | 4.32 | - | 41.20 | 98.96 | 0.99 | 99.04 |

| | Silver | | Sulfur | | Chromium | |
|---|---|---|---|---|---|---|
| | Content | Recovery rate | Content | Recovery rate | Content | Recovery rate |
| Metallic iron | 0.0038 | - | 0.38 | - | 0.83 | - |
| Slag | 0.0041 | - | 1.81 | - | 0.36 | - |
| Dust | 0.05 | 60.91 | 0.56 | - | 0.19 | - |

In Example 2, the recovery rate of iron recovered as the metallic iron was 98.18%, and the recovery rates of zinc and lead recovered as the dust were 98.96% and 99.04%, respectively.

### Example 3

In Example 3, after charging 1 ton of the intermediate product B into the melting furnace, coal was added as a reducing agent. The coal was blended at an equivalent ratio of 2.5:1 relative to the iron oxide contained in the intermediate product B. In addition, 111 kg of silica was charged into the melting furnace so that the basicity of the slag is 0.6. The contents (wt%) and recovery rates (%) of the metallic iron, the slag and the dust produced according to Example 3 are shown in Table 4 below.

**[Table 4]**

| | Iron | | Zinc | | Lead | |
|---|---|---|---|---|---|---|
| | Content | Recovery rate | Content | Recovery rate | Content | Recovery rate |
| Metallic iron | 96.55 | 98.23 | 0.01 | - | 0.0000 | - |
| Slag | 2.88 | - | 0.00 | - | 0.0001 | - |
| Dust | 11.96 | - | 12.68 | 97.86 | 0.04 | 97.12 |

| | Silver | | Sulfur | | Chromium | |
|---|---|---|---|---|---|---|
| | Content | Recovery rate | Content | Recovery rate | Content | Recovery rate |
| Metallic iron | 0.0005 | - | 0.29 | - | 0.0290 | - |
| Slag | 0.0001 | - | 0.05 | - | 0.0014 | - |
| Dust | 0.03 | 72.15 | 1.34 | - | 0.0038 | - |

In Example 3, the recovery rate of iron recovered as the metallic iron was 98.23%, and the recovery rates of zinc and lead recovered as the dust were 97.86% and 97.12%, respectively.

### Example 4

In Example 4, after charging 1 ton of the intermediate product C into the melting furnace, coal was added as a reducing agent. The coal was blended at an equivalent ratio of 2.5:1 relative to the iron oxide contained in the intermediate product C. In addition, 92 kg of silica was charged into the melting furnace so that the basicity of the slag is 0.6. The contents (wt%) and recovery rates (%) of the metallic iron, the slag and the dust produced according to Example 4 are shown in Table 5 below.

**[Table 5]**

| | Iron | | Zinc | | Lead | |
|---|---|---|---|---|---|---|
| | Content | Recovery rate | Content | Recovery rate | Content | Recovery rate |
| Metallic iron | 96.45 | 98.21 | 0.01 | - | 0.0000 | - |
| Slag | 3.33 | - | 0.00 | - | 0.0001 | - |
| Dust | 10.79 | - | 25.81 | 99.33 | 0.06 | 98.56 |

| | Silver | | Sulfur | | Chromium | |
|---|---|---|---|---|---|---|
| | Content | Recovery rate | Content | Recovery rate | Content | Recovery rate |
| Metallic iron | 0.0007 | - | 0.43 | - | 0.0410 | - |
| Slag | 0.0002 | - | 0.14 | - | 0.0048 | - |
| Dust | 0.03 | 66.54 | 1.68 | - | 0.0068 | - |

In Example 4, the recovery rate of iron recovered as the metallic iron was 98.21%, and the recovery rates of zinc and lead recovered as the dust were 99.33% and 98.56%, respectively.

### Example 5

In Example 5, after charging 1 ton of the intermediate product D into the melting furnace, coal was added as a reducing agent. The coal was blended at an equivalent ratio of 2.5:1 relative to the iron oxide contained in the intermediate product D. In addition, 150 kg of silica was charged into the melting furnace so that the basicity of the slag is 0.6. The contents (wt%) and recovery rates (%) of the metallic iron, the slag and the dust produced according to Example 5 are shown in Table 6 below.

**[Table 6]**

| | Iron | | Zinc | | Lead | |
|---|---|---|---|---|---|---|
| | Content | Recovery rate | Content | Recovery rate | Content | Recovery rate |
| Metallic iron | 95.01 | 98.41 | 0.03 | - | 0.0001 | - |
| Slag | 0.75 | - | 0.01 | - | 0.0007 | - |
| Dust | 4.94 | - | 26.31 | 98.21 | 1.99 | 99.70 |

| | Silver | | Sulfur | | Chromium | |
|---|---|---|---|---|---|---|
| | Content | Recovery rate | Content | Recovery rate | Content | Recovery rate |
| Metallic iron | 0.0022 | - | 0.66 | - | 0.15 | - |
| Slag | 0.0008 | - | 0.46 | - | 0.04 | - |
| Dust | 0.05 | 61.71 | 1.56 | - | 0.04 | - |

In Example 5, the recovery rate of iron recovered as the metallic iron was 98.41%, and the recovery rates of zinc and lead recovered as the dust were 98.21% and 99.70%, respectively. The intermediate products B, C, and D used in Examples 3 to 5 have higher iron contents than the intermediate product A used in Examples 1 and 2. The content of the metallic iron produced according to Examples 3 to 5 is higher than the content of the metallic iron produced according to Examples 1 and 2. Further, in all of Examples 1 to 5, the recovery rate of iron recovered as the metallic iron is 98% or more, and the recovery rate of zinc and lead recovered as the dust is 97% or more.

As described above, according to the embodiments of the present disclosure, it is possible to produce metallic iron having a content of 90% or more, thereby improving the recovery rate of metallic iron. In addition, it is possible to recycle valuable metals by improving the recovery rate of valuable metals such as zinc and lead. In this case, it is possible to reduce the amount of iron and valuable metals to be landfilled, and reduce landfill costs. In addition, it is possible to reduce the amount of slag generated by improving the recovery amount of iron and valuable metals, and reduce costs by minimizing the amount of slag to be treated.

### Example 6

In Example 6, after charging 1 ton of the intermediate product A into the melting furnace, coal was added as a reducing agent. The coal was blended at an equivalent ratio of 2.1:1 relative to the iron oxide contained in the intermediate product A. In addition, 20 kg of limestone was charged into the melting furnace so that the basicity of the slag is 0.8. The contents (wt%) and recovery rates (%) of the metallic iron, the slag and the dust produced according to Example 6 are shown in Table 7 below.

**[Table 7]**

| | Iron | | Zinc | | Lead | |
|---|---|---|---|---|---|---|
| | Content | Recovery rate | Content | Recovery rate | Content | Recovery rate |
| Metallic iron | 90.20 | 96.73 | 0.04 | - | 0.0002 | - |
| Slag | 1.20 | - | 0.04 | - | 0.0017 | - |
| Dust | 4.92 | - | 43.80 | 99.67 | 1.05 | 99.27 |

| | Silver | | Sulfur | | Chromium | |
|---|---|---|---|---|---|---|
| | Content | Recovery rate | Content | Recovery rate | Content | Recovery rate |
| Metallic iron | 0.0025 | - | 0.34 | - | 0.92 | - |
| Slag | 0.0039 | - | 1.79 | - | 0.28 | - |
| Dust | 0.05 | 65.23 | 0.78 | - | 0.23 | - |

In Example 6, the recovery rate of iron recovered as the metallic iron was 96.73%, and the recovery rates of zinc and lead recovered as the dust were 99.67% and 99.27%, respectively.

### Example 7

In Example 7, after charging 1 ton of the intermediate product A into the melting furnace, coal was added as a reducing agent. The coal was blended at an equivalent ratio of 1.7:1 relative to the iron oxide contained in the intermediate product A. In addition, 20 kg of limestone was charged into the melting furnace so that the basicity of the slag is 0.8. The contents (wt%) and recovery rates (%) of the metallic iron, the slag and the dust produced according to Example 7 are shown in Table 8 below.

**[Table 8]**

| | Iron | | Zinc | | Lead | |
|---|---|---|---|---|---|---|
| | Content | Recovery rate | Content | Recovery rate | Content | Recovery rate |
| Metallic iron | 90.80 | 96.01 | 0.02 | - | 0.0001 | - |
| Slag | 1.13 | - | 0.03 | - | 0.0012 | - |
| Dust | 4.73 | - | 44.60 | 98.67 | 1.08 | 99.49 |

| | Silver | | Sulfur | | Chromium | |
|---|---|---|---|---|---|---|
| | Content | Recovery rate | Content | Recovery rate | Content | Recovery rate |
| Metallic iron | 0.0024 | - | 0.35 | - | 0.87 | - |
| Slag | 0.0050 | - | 1.81 | - | 0.34 | - |
| Dust | 0.05 | 62.20 | 0.71 | - | 0.21 | - |

In Example 7, the recovery rate of iron recovered as the metallic iron was 96.01%, and the recovery rates of zinc and lead recovered as the dust were 98.67% and 99.49%, respectively.

### Example 8

In Example 8, after charging 1 ton of the intermediate product A into the melting furnace, coal was added as a reducing agent. The coal was blended at an equivalent ratio of 3.1:1 relative to the iron oxide contained in the intermediate product A. In addition, 20 kg of limestone was charged into the melting furnace so that the basicity of the slag is 0.8. The contents (wt%) and recovery rates (%) of the metallic iron, the slag and the dust produced according to Example 8 are shown in Table 9 below.

**[Table 9]**

| | Iron | | Zinc | | Lead | |
|---|---|---|---|---|---|---|
| | Content | Recovery rate | Content | Recovery rate | Content | Recovery rate |
| Metallic iron | 90.45 | 95.64 | 0.08 | - | 0.0002 | - |
| Slag | 2.83 | - | 0.09 | - | 0.0018 | - |
| Dust | 4.16 | - | 42.10 | 98.46 | 1.02 | 99.20 |

| | Silver | | Sulfur | | Chromium | |
|---|---|---|---|---|---|---|
| | Content | Recovery rate | Content | Recovery rate | Content | Recovery rate |
| Metallic iron | 0.0027 | - | 0.47 | - | 0.88 | - |
| Slag | 0.0041 | - | 1.74 | - | 0.34 | - |
| Dust | 0.05 | 65.23 | 0.36 | - | 0.21 | - |

In Example 8, the recovery rate of iron recovered as the metallic iron was 95.64%, and the recovery rates of zinc and lead recovered as the dust were 98.46% and 99.20%, respectively.

### Comparative Example 1

In Comparative Example 1, after charging 1 ton of the intermediate product A into the melting furnace, coal was added as a reducing agent. The coal was blended at an equivalent ratio of 1.3:1 relative to the iron oxide contained in the intermediate product A. In addition, 20 kg of limestone was charged into the melting furnace so that the basicity of the slag is 0.8. The contents (wt%) and recovery rates (%) of the metallic iron, the slag and the dust produced according to Comparative Example 1 are shown in Table 10 below.

**[Table 10]**

| | Iron | | Zinc | | Lead | |
|---|---|---|---|---|---|---|
| | Content | Recovery rate | Content | Recovery rate | Content | Recovery rate |
| Metallic iron | 90.11 | 85.48 | 0.08 | - | 0.0001 | - |
| Slag | 11.36 | - | 0.08 | - | 0.0069 | - |
| Dust | 3.38 | - | 36.18 | 98.33 | 0.386 | 97.11 |

| | Silver | | Sulfur | | Chromium | |
|---|---|---|---|---|---|---|
| | Content | Recovery rate | Content | Recovery rate | Content | Recovery rate |
| Metallic iron | 0.0025 | - | 0.85 | - | 0.45 | - |
| Slag | 0.0058 | - | 1.35 | - | 0.79 | - |
| Dust | 0.04 | 57.08 | 0.46 | - | 0.202 | - |

In Comparative Example 1, the recovery rate of iron recovered as the metallic iron was 85.48%, and the recovery rates of zinc and lead recovered as the dust were 98.33% and 97.11%, respectively.

### Comparative Example 2

In Comparative Example 2, after charging 1 ton of the intermediate product A into the melting furnace, coal was added as a reducing agent. The coal was blended at an equivalent ratio of 4.6:1 relative to the iron oxide contained in the intermediate product A. In addition, 20 kg of limestone was charged into the melting furnace so that the basicity of the slag is 0.8. The contents (wt%) and recovery rates (%) of the metallic iron, the slag and the dust produced according to Comparative Example 2 are shown in Table 11 below.

**[Table 11]**

| | Iron | | Zinc | | Lead | |
|---|---|---|---|---|---|---|
| | Content | Recovery rate | Content | Recovery rate | Content | Recovery rate |
| Metallic iron | 88.91 | 89.68 | 0.09 | - | 0.0002 | - |
| Slag | 8.12 | - | 0.08 | - | 0.0016 | - |
| Dust | 2.77 | - | 40.43 | 98.39 | 0.98 | 99.23 |

| | Silver | | Sulfur | | Chromium | |
|---|---|---|---|---|---|---|
| | Content | Recovery rate | Content | Recovery rate | Content | Recovery rate |
| Metallic iron | 0.0038 | - | 0.51 | - | 1.12 | - |
| Slag | 0.0032 | - | 1.62 | - | 0.15 | - |
| Dust | 0.05 | 64.86 | 0.51 | - | 0.22 | - |

In Comparative Example 2, the recovery rate of iron recovered as the metallic iron was 89.68%, and the recovery rates of zinc and lead recovered as the dust were 98.39% and 99.23%, respectively. Comparing Comparative Examples 1 and 2 with Examples 6 to 8, it can be seen that the recovery rate of metallic iron is rapidly lowered when the reducing agent is charged into the melting furnace at an equivalent ratio outside of 1.7:1 to 3.1:1 relative to the iron oxide contained in the intermediate product. In other words, when the reducing agent is charged into the melting furnace at an equivalent ratio of 1.7:1 to 3.1:1 relative to the iron oxide contained in the intermediate product, it is possible to improve the recovery rate of iron. In addition, it is possible to prevent cost increase due to excessive charging of the reducing agent.

Although the embodiments of the present disclosure have been described with reference to the accompanying drawings, those skilled in the art to which the present disclosure pertains will be able to understand that the embodiments can be implemented in other specific forms without changing the technical scope or essential features of the present disclosure.

Therefore, it should be understood that the embodiments described above are exemplary and not limitative in all respects. The scope of the present disclosure is defined by the claims rather than the detailed description. It should be construed that all changes or modified forms derived from the meaning and scope of the claims and equivalent concepts thereof are included in the scope of the present disclosure.

## Claims

1. A method for recovering iron and valuable metals from electric arc furnace dust, comprising:
an electric arc furnace dust treatment process of treating electric arc furnace dust to produce an intermediate product containing iron;
an intermediate product treatment process of heating the intermediate product to a predetermined temperature range so that the intermediate product charged into a melting furnace is melted and reduced; and
a recovery process of recovering metallic iron produced by reduction from the intermediate product and accommodated in the melting furnace in a molten state and recovering valuable metals generated in the form of dust in the intermediate product treatment process,
wherein the intermediate product treatment process includes a reducing agent charging process of charging a reducing agent containing carbon into the melting furnace to increase an amount of the metallic iron reduced from the intermediate product, and
the reducing agent is charged into the melting furnace at an equivalent ratio of 1.7:1 to 3.1:1 relative to iron oxide contained in the intermediate product.

2. The method of claim 1, wherein the reducing agent has a diameter of 5 mm to 20 mm.

3. The method of claim 1, wherein the intermediate product treatment process includes a flux charging process of charging a flux into the melting furnace to adjust a basicity (CaO/SiO₂) of slag generated in the intermediate product treatment process, and
the flux is charged into the melting furnace so that the basicity of the slag is 0.4 to 1.5.

4. The method of claim 3, wherein the flux includes at least one of limestone, silica and dolomite.

5. The method of claim 1, wherein the recovery process includes a metallic iron recovery process of discharging the metallic iron accommodated in the melting furnace in a molten state from the melting furnace and recovering the discharged metallic iron in the form of an ingot through a casting

6. The method of claim 1, wherein the recovery process includes a valuable metal recovery process of recovering the valuable metals through a bag filter process.

7. The method of claim 1, wherein an iron content in the metallic iron recovered in the recovery process is range of 90% to 97%.

8. The method of claim 1, wherein the predetermined temperature in the intermediate product treatment process is range of 1,450 °C to 1,650 °C .

9. The method of claim 1, wherein the melting furnace is one of a SAF (Submerged Arc Furnace), an ACEAF (Alternating Current Electronic Arc Furnace) and a DCEAF (Direct Current Electronic Arc Furnace).

10. The method of claim 1, wherein in the electric arc furnace dust treatment process, the electric arc furnace dust is treated to produce a crude zinc oxide and the intermediate product.
